# EUROPÄISCHE PATENTANMELDUNG

(11) **EP 2 431 681 A1**
(43) Veröffentlichungstag der Anmeldung: **21.03.2012**
(21) Anmeldenummer: 11187781.7
(22) Anmeldetag: 30.10.2007
(51) Int. Cl.: F24H 3/04, B01D 1/18, B03C 7/02, F26B 3/12, B03C 3/49, B03C 3/88, B03C 3/74, B01D 1/20

(54) **Heizung, Verfahren zum Heizen und Laminarisieren und Sprühtrockner**

(62) Teilanmeldung aus: 07119615.8
(71) Anmelder: Büchi Labortechnik AG, 9230 Flawil (CH)
(72) Erfinder: Schön, Mathias, 9602 Bazenheid (CH); Baumgartner, Ralph, 9000 St. Gallen (CH)
(74) Vertreter: Hepp Wenger Ryffel AG

(57) **Zusammenfassung**

Die Erfindung betrifft eine Heizung (1), insbesondere für einen Sprühtrockner (8), mit wenigstens einem Heizelement (2), wenigstens einem Heizkörper (3), der einen offenporigen Metallschaum (4) umfasst, sowie einem Fluideingang (5) und einem Fluidausgang (6). Erfindungsgemäss ist der Metallschaum (4) derart zwischen dem Fluideingang (5) und dem Fluidausgang (6) angeordnet, dass ein durch den Fluideingang (5) einströmendes und durch den Fluidausgang (6) ausströmendes Fluid (F) mittels des Metallschaums (4) laminarisiert wird. Weiterhin betrifft die Erfindung ein Verfahren zum gleichzeitigen Heizen und Laminarisieren eines Fluids (F) mit Hilfe eines offenporigen Metallschaums (4). Die Erfindung betrifft weiterhin einen elektrostatischen Abscheider (10), mit zumindest einer insbesondere hülsenförmigen Elektrode (11), die lösbar mit einem Basisteil (12) des Abscheiders (10) verbunden oder verbindbar ist. Ausserdem betrifft die Erfindung eine Abtrennvorrichtung (18) zum Abtrennen von Partikeln von einer Innenoberfläche (20) einer hülsenförmigen Elektrode (11), wobei die Abtrennvorrichtung (18) Abstreifmittel (21) zum Abstreifen der Partikel von der Innenoberfläche (20) enthält, sowie ein Verfahren zur Abtrennung von Partikeln. Schliesslich betrifft die Erfindung einen Sprühtrockner (8) mit einer erfindungsgemässen Heizung (1) und/oder einem elektrostatischen Abscheider (10).

## Beschreibung

Die vorliegende Erfindung betrifft eine Heizung, ein Verfahren zum gleichzeitigen Heizen und Laminarisieren eine Fluids, einen elektrostatischen Abscheider, einen Sprühtrockner, eine Abtrennvorrichtung, eine Kombination aus einem elektrostatischen Abscheider und einer Abtrennvorrichtung sowie ein Verfahren zum Abtrennen von Partikeln gemäss den Oberbegriffen der unabhängigen Patentansprüche.

Die Sprühtrocknung ist ein an sich bekanntes Verfahren, welches beispielsweise zur Gewinnung von Naturfarbstoffen, zur Isolierung von pharmazeutischen Wirkstoffen oder zur Mikroverkapselung eingesetzt wird. Bei der Sprühtrocknung wird ein Sprühgut, beispielsweise eine Lösung, Emulsion, Suspension oder Dispersion, beispielsweise mittels einer Düse in ein heisses Trocknungsgas versprüht und dadurch getrocknet. Die Heizung des Trocknungsgases erfolgt üblicherweise elektrisch oder vereinzelt mittels einer gas- oder ölbetriebenen Heizung. Das im Sprühgut enthaltene Lösungsmittel, welches etwa Wasser ist, wird durch das Trocknungsgas verdampft. Die somit erhaltenen Partikel, welche etwa in Form eines Pulvers, Agglomerats oder Granulats vorliegen können, werden anschliessend vom Trocknungsgas getrennt. Dies geschieht z. B. mit Hilfe eines Siebs, eines elektrostatischen Abscheiders oder eines Zyklons. Ein Sprühtrockner zur Durchführung einer Sprühtrocknung ist beispielsweise in DE 40 28 341 beschrieben.

Die bei bekannten Sprühtrocknern verwendeten elektrischen Heizungen erfordern die Erzeugung von Turbulenzen im Trocknungsgas, damit das Trocknungsgas mit einem Heizkörper der Heizung in Kontakt gerät und es somit zu einem grossen Wärmeübertrag auf das Fluid kommt. Derartige Turbulenzen führen jedoch auch zu einer unkontrollierten Verwirbelung des Sprühguts, so dass sich dieses beispielsweise in unerwünschter Weise an den Wänden der Trocknungskammer absetzen kann. Zudem ist die Wärmeverteilung innerhalb des Heizkörpers somit auch innerhalb des Trocknungsgases nicht gleichmässig, was zu einer ungleichmässigen und schlecht kontrollierbaren Partikelbildung führt. Weiterhin reagieren herkömmliche Heizungen relativ träge auf eine Leistungs- und Temperaturregulierung. Darüber hinaus sind herkömmliche Heizungen aufgrund ihrer grossen Bauhöhe nachteilig. Schliesslich besteht ein Verbesserungsbedarf hinsichtlich des Wärmeübertrags vom Heizkörper auf das Trocknungsgas.

Es ist daher eine Aufgabe der vorliegenden Erfindung, die Nachteile des Bekannten zu vermeiden und insbesondere eine Heizung für einen Sprühtrockner bereitzustellen, welche Turbulenzen im zugeführten Trocknungsgas vermeidet.

Demgemäss betrifft ein erster Aspekt der Erfindung eine Heizung mit wenigstens einem Heizelement, wenigstens einem Heizkörper sowie einem Fluideingang und einem Fluidausgang. Der Heizkörper umfasst einen offenporigen Metallschaum, welcher zwischen dem Fluideingang und dem Fluidausgang angeordnet ist. Der Fluideingang und/oder der Fluidausgang können dabei insbesondere direkt von einer der Oberflächen des Metallschaums gebildet sein. Die Anordnung des Metallschaums ist so gewählt, dass ein Fluid laminarisiert wird, welches durch den Fluideingang einströmt und durch den Fluidausgang ausströmt. Bei dem Fluid kann es sich um ein Gas, insbesondere um ein Trocknungsgas in einem Sprühtrockner handeln.

Metallschäume an sich sind beispielsweise aus DE 199 39 155 bekannt. Derartige Metallschäume finden beispielsweise in Wärmetauschern Verwendung, wie etwa in dem in DE 101 23 456 dargestellten. Die Anordnung des Metallschaums in der erfindungsgemässen Heizung bewirkt, dass ein aus dem Fluidausgang ausströmendes Fluid als laminare Strömung austritt. Mittels des Heizelements kann der Metallschaum erhitzt werden und somit auch das durchströmende Fluid heizen. Auf Grund der grossen Oberfläche innerhalb des offenporigen Metallschaums kommt es zu einem sehr effektiven Wärmeübertrag von dem Metallschaum auf das Fluid. Somit kann überraschend mittels eines einzigen Bauelements ein gleichzeitig heisser und laminarer Fluidstrom erzielt werden. Überdies wird durch den Metallschaum auch eine gleichmässige Temperaturverteilung des austretenden Fluidstroms erreicht. Weiterhin zeichnet sich ein solcher Metallschaum durch eine Baugrösse auf, welche die einer herkömmlichen elektrischen Heizung um ein Vielfaches unterschreitet.

Bevorzugt ist das Heizelement als elektrisches Widerstandsheizelement ausgebildet. Vorteilhaft umfasst das Widerstandheizelement einen Heizdraht, welcher insbesondere gewunden sein kann. Im Gegensatz zu bekannten Wärmetauschern, bei denen ein zweites Fluid die Wärme zuführt, kommt es bei dieser Ausführung zu weitaus weniger Verlusten, da die Heizwirkung direkt im Heizelement und damit direkt im oder am Metallschaum auftritt.

In einer bevorzugten Ausführung ist das Heizelement direkt mit dem Metallschaum verbunden, insbesondere darin eingepresst. Hierdurch tritt ein sehr effektiver Wärmeübertrag auf den Metallschaum und damit auch auf das durchströmende Fluid auf. Weiterhin erlaubt eine derartige Verbindung eine schnelle Temperaturregelung.

Bevorzugt umfasst der Metallschaum Aluminium. Besonders bevorzugt umfasst er eine Aluminiumlegierung, insbesondere AlSi7Mg. Weiterhin bevorzugt beträgt das Verhältnis des Porenvolumens zum Gesamtvolumen mindestens 60 %, wodurch eine hohe Durchströmbarkeit erzielt wird. Ein derartiger Werkstoff an sich ist etwa in DE 103 36 657 beschrieben. Ebenfalls bevorzugt liegt die Porengrösse im Bereich zwischen 0,1 mm und 4 mm, bevorzugt zwischen 0,2 mm und 2 mm, besonders bevorzugt zwischen 0,4 mm und 1,2 mm. In einer Ausführungsform ist der Metallschaum zwischen zwei von dem Fluid durchströmbaren Halteelementen angeordnet. Bevorzugt wird der Metallschaum zwischen den beiden Halteelementen gehalten. Bei den Halteelementen kann es sich insbesondere um Gitter handeln. Derartige Gitter erlauben es, gleichzeitig den Metallschaum zu halten und das Fluid durchströmen zu lassen. Weiterhin betrifft die Erfindung einen Sprühtrockner mit einer Heizung mit einem offenporigen Metallschaum. Ein derartiger Sprühtrockner umfasst ausser der Heizung zumindest eine Trocknungskammer sowie eine Austrittsöffnung für das Sprühgut, beispielsweise in Form einer Düse, und eine Austrittsöffnung für das Trocknungsgas.

Die erfindungsgemässe Heizung ist derart angeordnet, dass ein Trocknungsgas in den Fluideingang einströmen und aus dem Fluidausgang ausströmen kann und von dort aus der Austrittsöffnung in die Trocknungskammer strömen kann. Besonders bevorzugt ist der Fluidausgang der Heizung direkt an der Trocknungskammer angeordnet. Auf diese Weise entstehen zwischen der Heizung und der Trocknungskammer keine Turbulenzen. Weiterhin bevorzugt ist die Heizung derart ausgebildet und angeordnet, dass das laminarisierte Trocknungsgas aus dem Fluidausgang im Wesentlichen in einer Richtung strömt, welche mit der Richtung des ausströmenden Sprühguts übereinstimmt. Hierdurch werden Turbulenzen vermieden, so dass die Trocknung unter kontrollierten Bedingungen stattfinden kann und sich das Sprühgut und/oder die erzeugten Partikel nicht an unerwünschten Stellen absetzen.

Weiterhin kann der Sprühtrockner Zuleitungen für das Sprühgut, Zuleitungen für das Trocknungsgas, Filter, Mittel zur Abgasbehandlung, eine Betriebsvorrichtung für die Heizung und/oder die Zuleitungen und/oder Stativmaterial umfassen. Überdies kann er Mittel zum Sammeln der agglomerierten Partikel oder eines erzeugten Pulvers enthalten, wie beispielsweise einen elektrostatischen Abscheider, ein Sieb oder einen Zyklon. Bevorzugt ist der Sprühtrockner aufgrund seiner Dimensionen für die Verwendung in einem Labor geeignet. Typischerweise beträgt sein Gewicht weniger als etwa 100 kg, und seine typische Bauhöhe ist geringer als etwa 2 m. Die Trocknungskammer hat typischerweise eine horizontale Ausdehnung von höchstens 50 cm, bevorzugt höchstens 25 cm.

Darüber hinaus betrifft die vorliegende Erfindung ein Verfahren zum gleichzeitigen Heizen und Laminarisieren eines Fluids, wobei das Fluid durch einen offenporigen Metallschaum strömt. Bei dem Fluid kann es sich um ein Gas, insbesondere um ein Trocknungsgas in einem Sprühtrockner handeln. Eine Ausführung des Verfahrens sieht die Verwendung eines offenporigen Metallschaums in einem Sprühtrockner vor, bei dem ein Trocknungsgas vor dem Eintritt in eine Trocknungskammer mittels des Metallschaums erhitzt und gleichzeitig laminarisiert wird. Der Metallschaum kann dabei in einer erfindungsgemässen Heizung angeordnet sein.

Ein weiterer Aspekt der Erfindung betrifft einen elektrostatischen Abscheider, der insbesondere in einem Sprühtrockner verwendet werden kann. In einem derartigen elektrostatischen Abscheider können Partikel, beispielsweise bei einer Sprühtrocknung erhaltene Partikel, in einem elektrischen Feld aufgeladen und anschliessend an einer Elektrode abgeschieden werden.

Es sind mehrere Mechanismen bekannt, mittels welcher die somit abgeschiedenen Partikel von der Elektrode abgetrennt und aufgesammelt werden können. So können die Partikel beispielsweise rein mechanisch, wie etwa durch Abstreifen oder Rütteln, durch Schall oder Ultraschall, Umpolung der Elektroden oder durch Abspülen mit einer Flüssigkeit aufgesammelt werden. Aus US 5,437,713 ist beispielsweise eine Vorrichtung zum Sammeln von Schmutzpartikeln in einem elektrostatischen Abscheider bekannt. Der Abscheider enthält plattenförmige Elektroden, von denen die Partikel durch Abstreifen gesammelt werden. Die in diesem Dokument dargestellte Konstruktion ist jedoch mechanisch sehr aufwendig, da die Abstreifer zwischen die sich im Abscheider befindenden Elektroden eingeführt werden müssen.

Durch den hier vorgeschlagenen elektrostatischen Abscheider werden dieser und weitere Nachteile überwunden. Der erfindungsgemässe Abscheider weist wenigstens eine Elektrode auf, welche insbesondere hülsenförmig ausgebildet sein kann. Erfindungsgemäss ist diese Elektrode lösbar mit einem Basisteil des Abscheiders verbunden oder verbindbar. Auf Grund dieser lösbaren Verbindbarkeit der Elektrode mit dem Basisteil ist es möglich, die Elektrode zur Reinigung und/oder zum Abtrennen von daran abgeschiedenen Partikeln zu entfernen. Weiterhin ist es möglich, den Abscheider abwechselnd mit mehreren, insbesondere voneinander verschiedenen Elektroden zu betreiben oder auch beispielsweise defekte Elektroden auszutauschen.

Vorteilhaft ist die Elektrode so mit dem Basisteil verbunden, dass sie aus dem Basisteil des Abscheiders herausziehbar ist. Dies erlaubt eine besonders einfache Abtrennung der Elektrode. Besonders bevorzugt ist die Elektrode ausschliesslich mittels einer Zugkraft vom Basisteil trennbar. Weitere Schritte, wie beispielsweise das Lösen von Schrauben, entfallen somit. Weiterhin bevorzugt ist die Elektrode durch Hineindrücken lösbar mit dem Basisteil des Abscheiders verbindbar. Besonders bevorzugt ist für das Verbinden ausschliesslich eine Druckkraft nötig. Weitere Schritte, wie beispielsweise das Festziehen von Schrauben, entfallen somit.

Gemäss einer bevorzugten Ausführungsform ist die Elektrode hülsenförmig ausgebildet, und der Abscheider umfasst eine Gegenelektrode, die eine Vielzahl von radialen nach Aussen gerichteten Spitzen aufweist. Zumindest in einer Verbindungsposition, in welcher die Elektrode und das Basisteil des Abscheiders miteinander verbunden sind, ist die Gegenelektrode dabei innerhalb der Elektrode angeordnet. Derartige Spitzen erzeugen hohe lokale elektrische Feldstärken, was zur Aufladung der durchströmenden Partikel führt. Die Spitzen können beispielsweise an einer Seitenkante eines Metallbandes angeordnet sein, welches auf der Mantelfläche eines Zylinders angeordnet ist. Das Metallband kann dabei beispielsweise spiralförmig aufgewickelt sein oder in Form mehrerer Kränze angeordnet sein. Die Spitzen können etwa als Zacken von etwa dreieckförmigen Ausstanzungen aus dem Metallband ausgebildet sein. Eine derartige Elektrode an sich ist in DE 20 2005 018 606 beschrieben.

Vorteilhaft weist das Basisteil des Abscheiders eine Steckaufnahme auf, in welche die Elektrode lösbar einsteckbar ist. Insbesondere im Falle einer hülsenförmigen Elektrode kann diese Elektrode in Richtung ihrer Längsachse einsteckbar sein.

In einer bevorzugten Ausführungsform ist die hülsenförmige Elektrode in Richtung ihrer Längsachse vom Basisteil des Abscheiders trennbar. Dabei ist die hülsenförmige Elektrode bevorzugt derart mit dem Basisteil verbindbar, dass sie von diesem trennbar ist, ohne dass eine Gegenelektrode vom Basisteil getrennt werden müsste. Dies gestattet eine besonders einfache Entnahme der Elektrode, beispielsweise zu Reinigungszwecken, ohne eine vollständige Demontage des Abscheiders.

Besonders bevorzugt weist die Steckaufnahme elektrische Kontakte auf, die geerdet werden können. Dies gestattet es, die Elektrode direkt durch das Einstecken mit den elektrischen Kontakten in Verbindung zu bringen. Weitere Schritte zum Anlegen von Kontakten sind somit nicht nötig. Bevorzugt sind die elektrischen Kontakte als Federkontakte ausgebildet, was eine besonders einfache Handhabung ermöglicht.

Bevorzugt weist das Basisteil einen Kabelkanal auf, welcher mindestens ein Kabel zur Beaufschlagung der Elektrode und/oder der Gegenelektrode mit einem elektrischen Potential enthält. Unter einem elektrischen Potential wird hier und im Folgenden stets auch ein Nullpotential, also eine Erdung verstanden. Besonders bevorzugt ist das Kabel im Kabelkanal vergossen.

Ein weiterer Aspekt der Erfindung betrifft einen Sprühtrockner mit einem elektrostatischen Abscheider, welcher mindestens eine Elektrode und mindestens eine Gegenelektrode aufweist. Der Sprühtrockner kann weiterhin eines oder mehrere der oben genannten Bauelemente enthalten.

Erfindungsgemäss ist der Abscheider relativ zum Sprühtrockner wahlweise in eine Betriebsposition oder in eine Entnahmeposition bringbar. In der Betriebsposition sind die Elektroden und Gegenelektroden des Abscheiders je mit einem elektrischen Potential beaufschlagbar. In der Entnahmeposition ist wenigstens eine Elektrode des Abscheiders vom Sprühtrockner getrennt oder trennbar. Insbesondere kann in der Entnahmeposition der gesamte Abscheider vom Sprühtrockner getrennt werden.

Insbesondere kann es sich bei dem elektrostatischen Abscheider des Sprühtrockners um einen erfindungsgemässen Abscheider handeln.

Ein derartiger Aufbau gestattet es, zumindest eine Elektrode des Abscheiders aus dem Sprühtrockner zu entfernen, diese beispielsweise zu reinigen und/oder Partikel davon abzutrennen und die Elektrode anschliessend wieder in den Sprühtrockner einzusetzen.

In einer Ausführungsform wird der Abscheider dadurch von der Betriebsposition in die Entnahmeposition überführt, dass er in eine Richtung relativ zum Sprühtrockner bewegt wird, die im Wesentlichen parallel zu einer Längsachse der Elektrode ist. Bevorzugt weist der Sprühtrockner eine Betätigungsvorrichtung auf, mittels welcher der Abscheider direkt oder indirekt wahlweise in die Betriebsposition oder in die Entnahmeposition bringbar ist. Besonders bevorzugt ist die Betätigungsvorrichtung einhändig bedienbar. Dies erlaubt es, auf einfache Weise den Abscheider in eine Position zu überführen, in welcher wenigstens eine Elektrode vom Abscheider getrennt werden kann.

Gemäss einer Ausführungsform umfasst die Betätigungsvorrichtung einen Betätigungshebel, welcher relativ zum Sprühtrockner drehbar und/oder verschiebbar ist. Hierdurch wird eine besonders einfache Bedienung erreicht.

Gemäss einer Ausführungsform ist der Abscheider in der Entnahmeposition in einer Entnahmerichtung vom Sprühtrockner trennbar, welche im Wesentlichen senkrecht zu einer Längsachse der Elektrode ist. Insbesondere bei länglich ausgebildeten Sprühtrocknern, bei denen die Elektrode entlang der Längsrichtung des Sprühtrockners ausgerichtet ist, sorgt dieser Mechanismus für eine einfache Entnahme der Elektrode.

Gemäss einer weiteren bevorzugten Ausführungsform ist die Elektrode des Abscheiders in der Entnahmeposition vom Basisteil des Abscheiders trennbar. Dies erlaubt es, den Abscheider zunächst in die Entnahmeposition zu überführen und anschliessend die Elektrode vom Basisteil zu trennen.

Des Weiteren betrifft die Erfindung eine Abtrennvorrichtung zum Abtrennen von Partikeln von einer Innenoberfläche einer hülsenförmigen Elektrode. Die Abtrennvorrichtung weist Abstreifmittel zum Abstreifen der Partikel von der Innenoberfläche auf. Bei der Elektrode kann es sich um die Elektrode eines erfindungsgemässen elektrostatischen Abscheiders handeln. Die Abtrennvorrichtung erlaubt es, bei der elektrostatischen Abscheidung abgeschiedene Partikel mechanisch abzutrennen und insbesondere zu sammeln. Gemäss einer bevorzugten Ausführungsform sind die Abstreifmittel um eine Drehachse drehbar angeordnet. Diese Drehachse kann so ausgerichtet sein, dass sie mit einer Längsachse der Elektrode übereinstimmt oder im Wesentlichen parallel zu ihr ist. Dies ermöglicht das Abstreifen in einer Richtung, welche im Wesentlichen senkrecht zur Längsachse der Elektrode liegt. Im Gegensatz zu Abstreifmitteln, welche lediglich ein Abstreifen parallel zur Längsachse der Elektrode erlauben, wird hierdurch eine geringe Aufbauhöhe während des Abstreifens erzielt.

Bevorzugt sind die Abstreifmittel drehbar mit einem Deckel verbunden, welcher mit der Elektrode lösbar verbindbar ist. Insbesondere kann der Deckel formschlüssig auf die Elektrode aufsetzbar sein. Somit wird ein Verkippen der Drehachse gegenüber der Längsachse der Elektrode verhindert, was die Stabilität während des Abstreifens erhöht und somit die Handhabung vereinfacht.

Bevorzugt umfassen die Abstreifmittel mindestens einen insbesondere elastischen Streifen mit einer Abstreifkante. Diese Abstreifkante ist im Wesentlichen parallel zu der Drehachse der Elektrode und mit der Innenoberfläche der Elektrode in Kontakt bringbar. Insbesondere ist die Abstreifkante derart ausgebildet, dass sie in ihrer gesamten Länge mit der Elektrode in Kontakt bringbar ist. Alternativ oder zusätzlich ist die Abstreifkante derart ausgebildet, dass sie im Wesentlichen entlang der gesamten axialen Länge der Elektrode mit der Innenoberfläche in Kontakt bringbar ist. Dies garantiert ein besonders effektives Abstreifen, da die gesamte Innenoberfläche der Elektrode mit einer einzigen Umdrehung des Streifens überstrichen werden kann.

Zusätzlich kann die Abtrennvorrichtung Auffangmittel zum Auffangen der abgestreiften Partikel enthalten. Diese Auffangmittel können beispielsweise einen Trichter umfassen, dessen Öffnung auf die Form und Grösse der Elektrode abgestimmt ist. Besonders bevorzugt sind die Auffangmittel formschlüssig mit der Elektrode verbindbar. Dies verhindert das Kippen der Elektrode gegenüber den Auffangmitteln, insbesondere bei Bewegung der Abstreifmittel sowie den Verlust von Partikeln.

Überdies können die Auffangmittel einen Auffangbehälter aufweisen, welcher insbesondere unterhalb des Trichters angeordnet ist oder angeordnet werden kann. Insbesondere kann der Auffangbehälter formschlüssig mit dem Trichter verbindbar sein. Auch dies erhöht die Stabilität der Abtrennvorrichtung, insbesondere bei Bewegung der Abstreifmittel.

Ein weiterer Aspekt der Erfindung betrifft eine Kombination, welche einen erfindungsgemässen elektrostatischen Abscheider sowie eine erfindungsgemässe Abtrennvorrichtung umfasst. Dabei sind die Form und Grösse der Abtrennvorrichtung und der mindestens einen Elektrode des elektrostatischen Abscheiders derart aufeinander abgestimmt, dass mittels der Abtrennvorrichtung Partikel von einer Innenoberfläche der Elektrode abtrennbar sind. Diese Kombination erlaubt es, die Partikel zunächst in dem Abscheider abzuscheiden und sie anschliessend mit Hilfe der Abtrennvorrichtung aufzusammeln.

Weiterhin kann die Kombination auch einen Sprühtrockner umfassen, welcher den elektrostatischen Abscheider enthält. Insbesondere kann es sich dabei um einen wie vorstehend beschriebenen Sprühtrockner handeln. Insgesamt erlaubt es diese Kombination, Partikel mittels Sprühtrocknung zu erzeugen, sie abzuscheiden und anschliessend aufzusammeln.

Schliesslich betrifft die Erfindung ein Verfahren zum Abtrennen von Partikeln von einer Innenoberfläche einer hülsenförmigen Elektrode eines elektrostatischen Abscheiders. Das Verfahren enthält die folgenden Schritte:
a) Entnahme der Elektrode aus dem Abscheider,
b) Abtrennen von Partikeln von der Innenoberfläche der Elektrode.

Insbesondere kann zum Abtrennen der Partikel eine erfindungsgemässe Abtrennvorrichtung verwendet werden.

Gemäss einer Weiterbildung des Verfahrens kann der verwendete elektrostatische Abscheider in einem erfindungsgemässen Sprühtrockner enthalten sein. Das Verfahren umfasst dann insbesondere auch die Erzeugung der Partikel in dem Sprühtrockner.

Im Folgenden wird die Erfindung anhand eines Ausführungsbeispiels und Zeichnungen näher erläutert. Es zeigen:
- Figur 1a:: eine Explosionsdarstellung einer erfindungsgemäss Heizung;
- Figur 1b:: eine perspektivische Draufsicht auf die Heizung gemäss Figur 1a;
- Figur 2:: einen erfindungsgemässen Sprühtrockner mit einer erfindungsgemässen Heizung;
- Figur 3:: einen erfindungsgemässen elektrostatischen Abscheider;
- Figur 4a:: eine perspektivische Ansicht der Gegenelektrode des elektrostatischen Abscheiders gemäss Figur 3;
- Figur 4b:: eine Seitenansicht der Gegenelektrode gemäss Figur 4a;
- Figur 5a:: eine perspektivische Ansicht auf die Oberseite des Basisteils des elektrostatischen Abscheiders gemäss Figur 3;
- Figur 5b:: eine perspektivische Ansicht auf die Unterseite des Basisteils gemäss Figur 5a;
- Figur 6:: eine Betätigungsvorrichtung für einen erfindungsgemässen Sprühtrockner;
- Figur 7:: eine erfindungsgemässe Abtrennvorrichtung.

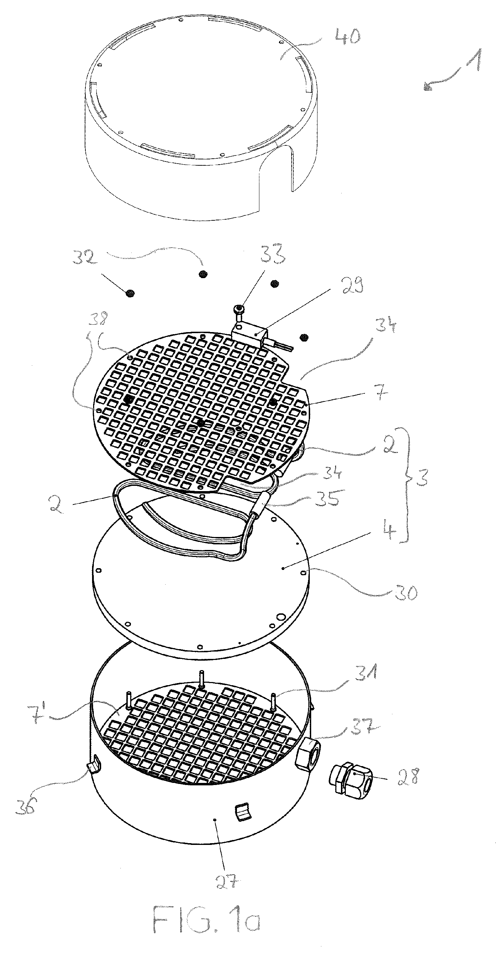

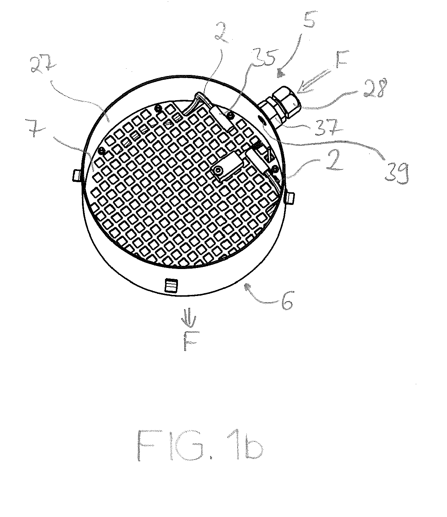

In den Figuren 1a und 1b ist eine erfindungsgemässe Heizung 1 dargestellt. Die Heizung 1 enthält zwei Heizelemente, welche als Kabelheizelemente 2 ausgebildet sind. Die Kabelheizelemente 2 enthalten jeweils mindestens einen insbesondere gewundenen Heizdraht, welcher beim Durchfluss eines elektrischen Stromes erhitzt wird. Die Heizung 1 umfasst weiterhin einen Heizkörper 3, der als offenporiger Metallschaum 4 ausgebildet ist. Der Metallschaum 4 besteht aus der Aluminiumlegierung AlSi7Mg und kann von der m-pore GmbH, 01277 Dresden, Deutschland bezogen werden. Der Metallschaum 4 ist im Wesentlichen kreisscheibenförmig und hat einen Durchmesser von 160 bis 200 mm und eine Dicke von 10 mm.

Die Kabelheizelemente 2 wurden von der Firma Watlow GmbH, 76709 Kronau, Deutschland bezogen. Sie sind in den Metallschaum 4 eingepresst und mit einer hier nicht dargestellten Spannungsversorgung verbindbar. Beide Kabelheizelemente 2 liefern bei einer anliegenden Spannung von 115 V eine Leistung von jeweils 300 W. Eine Aufheizung des Metallschaums 4 auf eine homogene Betriebstemperatur von 120 °C ist mit diesen Kabelheizelementen 2 innerhalb von 5 Minuten möglich. An ihren Enden sind die Kabelheizelemente 2 mit Mitteln zur mechanischen Zugentlastung 35 versehen.

Der Heizkörper 3, welcher den Metallschaum 4 sowie die darin eingepressten Kabelheizelemente 2 umfasst, wird zwischen zwei im Wesentlichen ebenfalls kreisscheibenförmigen Gittern 7, 7' gehalten. Das obere Gitter 7 weist zwei Einkerbungen 34 auf, durch welche jeweils eines der Kabelheizelemente 2 geführt ist. An dem unteren Gitter 7' sind Einpressbolzen 31 angeordnet, welche Fixieröffnungen 30 im Metallschaum 4 sowie Fixieröffnungen 38 im oberen Gitter 7 durchdringen. Der Heizkörper 3 wird mittels Muttern 32 zwischen den beiden Gittern 7, 7' gehalten, welche auf die Einpressbolzen 31 aufgesetzt sind. Die Gesamtheit aus Heizkörper 3 und Gittern 7, 7' wird in einem hülsenförmigen Mantel 27 gehalten, an dessen Oberseite eine Abdeckung 40 angeordnet ist. Weiterhin sind an der Aussenoberfläche des Mantels 27 Winkel 36 angeordnet, mittels derer die Heizung 1 beispielsweise in einem Sprühtrockner befestigbar ist.

An der Aussenseite des Mantels 27 ist eine Anschlussmutter 37 angeordnet, welche mit einer Durchbrechung 39 im Mantel 27 in Verbindung steht und mit einer Kabelverschraubung 28 verbindbar ist. Die Anschlussmutter 37 bildet einen Fluideingang 5 der Heizung 1. Ein Fluidausgang 6 der Heizung 1 wird vom unteren Gitter 7' gebildet. Die Ausgestaltung der Heizung 1 ermöglicht es, dass ein Fluid F, welches durch die den Fluideingang 5 bildende Anschlussmutter 37 in die Heizung 1 einströmt, durch den Metallschaum 4 gleichzeitig erhitzt und laminarisiert wird und anschliessend durch das den Fluidausgang 6 bildende untere Gitter 7' aus der Heizung 1 ausströmen kann.

Die Heizung 1 weist überdies einen Übertemperaturschutz 29 mit einem Temperatursensor auf, welcher mit Hilfe einer Schraube 33 am oberen Gitter 7 befestigt ist.

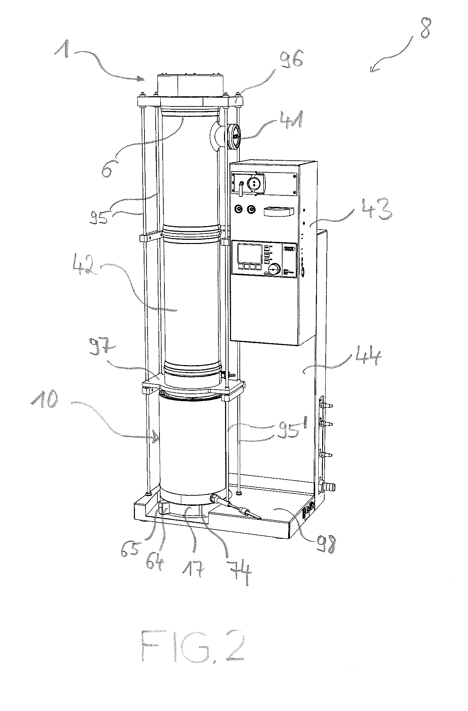

In der Figur 2 ist ein erfindungsgemässer Sprühtrockner 8 dargestellt. Der Sprühtrockner 8 umfasst ein Gestell 44 mit Zugstangen 95, 95', einer Endplatte 96 und einer Zwischenplatte 97. Mittels der oberen Zugstangen 95 ist eine durch ein hülsenförmiges Glas begrenzte Trocknungskammer 42 zwischen der Endplatte 96 und der Zwischenplatte 97 eingespannt. Die Zwischenplatte 97 ist ihrerseits mittels unterer Zugstangen 95' oberhalb von einer Grundfläche 98 des Gestells befestigt. Die Trocknungskammer 42 weist einen Durchmesser im Bereich von 160 bis 200 mm auf. Durch einen Sprühguteinlass 41 und eine hier nicht dargestellte Düse kann ein Sprühgut in die Trocknungskammer 42 eingeleitet werden. Am oberen Ende der Trocknungskammer 42 ist die vorstehend beschriebene Heizung 1 angeordnet, welche den hier nicht erkennbaren Metallschaum enthält. Ein Trocknungsgas kann durch den hier nicht dargestellten Fluideingang in die Heizung 1 einströmen, von dem Metallschaum erhitzt und gleichzeitig laminarisiert werden und die Heizung 1 anschliessend durch den Fluidausgang 6 verlassen, welcher direkt am oberen Ende der Trocknungskammer 42 angeordnet ist.

Als Trocknungsgas wird in einer Betriebsweise Luft (also ein Gemisch aus N₂ und O₂) mit einem optionalen und variabel einstellbaren Anteil an CO₂ oder eines inerten Gases eingesetzt. Gemäss einer anderen Betriebsweise wird als Trocknungsgas ein O₂-freies Gemisch verwendet, insbesondere ein Gemisch, welches N₂ und CO₂ enthält. Durch Vermeidung von O₂ wird einerseits die Erzeugung von Ozon (O₃) im elektrischen Feld eines elektrostatischen Abscheiders vermieden, welches aufgrund seiner oxidierenden Wirkung die entstehenden Partikel zerstören könnte.

Das durch das Trocknungsgas getrocknete Sprühgut kann durch die Trocknungskammer 42 hindurch strömen und in einen elektrostatischen Abscheider 10 eindringen, welcher unterhalb der Trocknungskammer 42 und der Zwischenplatte 97 angeordnet ist. An dem Gestell 44 ist weiterhin eine Bedieneinrichtung 43 angeordnet, mittels welcher beispielsweise die Parameter der Heizung 1, der Zuführung des Sprühguts und/oder des elektrostatischen Abscheiders 10 geregelt werden können.

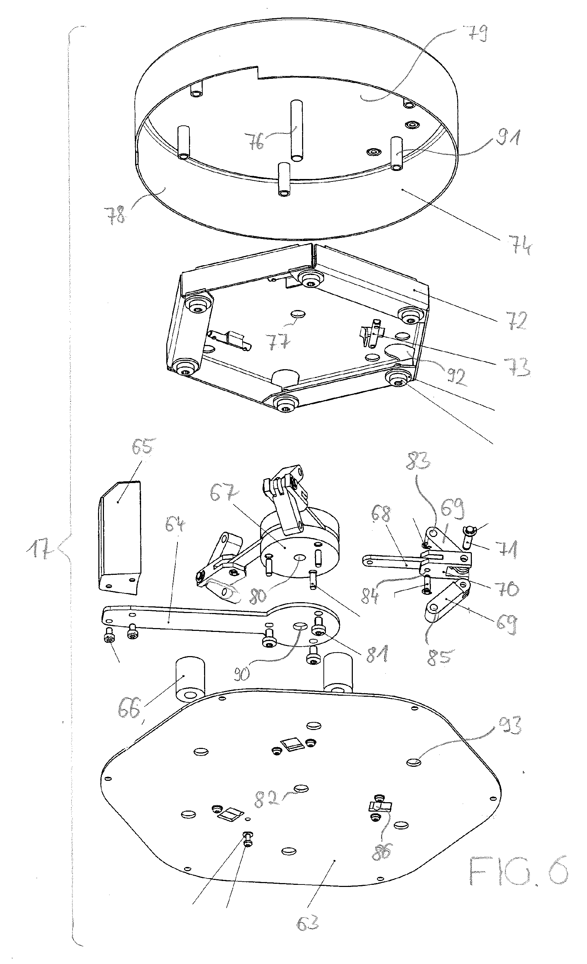

Der Abscheider 10 ist auf einer Betätigungsvorrichtung 17 angeordnet. Die Betätigungsvorrichtung 17 umfasst einen Betätigungshebel 64, welcher um eine vertikale Achse drehbar ist. Am Ende des Betätigungshebels 64 ist ein Griff 65 angeordnet. Durch eine Drehung des Betätigungshebels 64 um die vertikale Achse ist eine Stützplatte 74 der Betätigungsvorrichtung 17 in vertikaler Richtung bewegbar (vgl. Figur 6 unten). Auf diese Weise ist der Abscheider 10 wahlweise in eine Betriebsposition oder in eine Entnahmeposition bringbar. In der Betriebsposition, welche der höheren vertikalen Position des Abscheiders 10 entspricht, sind die Elektroden des Abscheiders 10 je mit einem elektrischen Potential beaufschlagbar. In der Entnahmeposition, welche der niedrigeren vertikalen Position des Abscheiders 10 entspricht, ist der Abscheider 10 in einer horizontalen Richtung, d. h. durch seitliche Entnahme, vom Sprühtrockner 8 trennbar. In dieser Entnahmeposition ist das obere Ende des Abscheiders 10 nicht mehr in Kontakt mit der Zwischenplatte 97 und dem unteren Ende der Trocknungskammer 42. Die Begriffe "horizontal" und "vertikal" beziehen sich hier und im Folgenden auf den Abscheider 10 in der bestimmungsgemässen Betriebslage, d. h. wenn dieser mit dem Gestell 44 auf einer horizontalen Ebene steht.

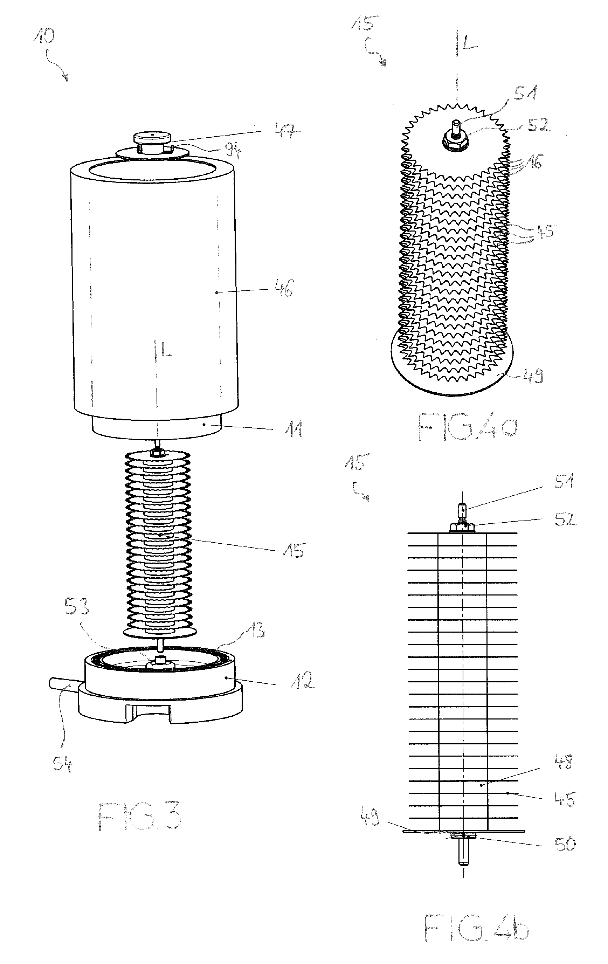

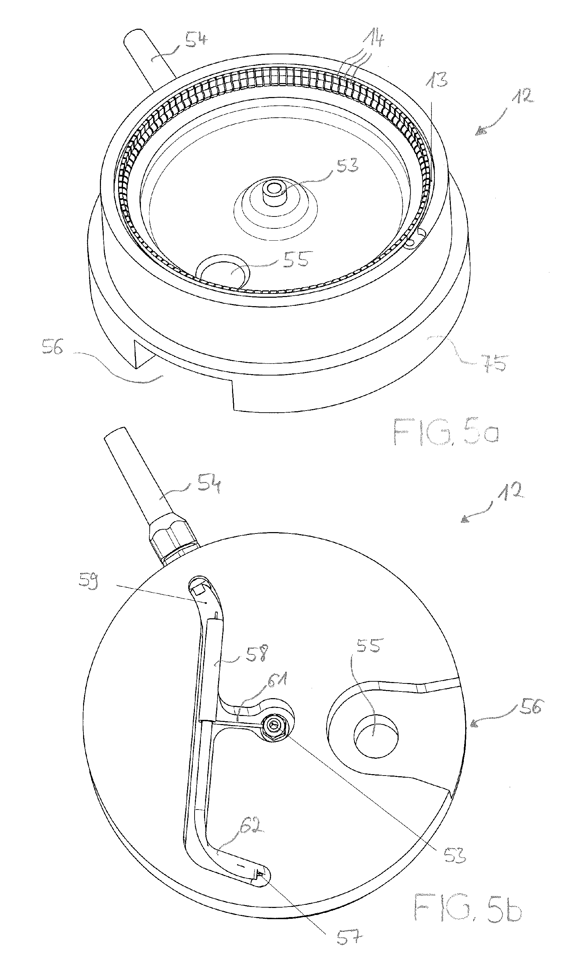

In der Figur 3 ist der erfindungsgemässe elektrostatische Abscheider 10 dargestellt. Der Abscheider 10 weist ein Basisteil 12 auf, welches an seiner Oberseite eine Steckaufnahme 13 enthält. Die Steckaufnahme 13 weist elektrische Kontakte auf, welche als eine Vielzahl von Federkontakten ausgebildet sind (siehe Figuren 5a,b unten) und welche auf ein bestimmtes elektrisches Potential gebracht, insbesondere geerdet werden können. Weiterhin umfasst der Abscheider 10 eine hülsenförmige, metallische Elektrode 11, welche mittels einer Druckkraft mit der Steckaufnahme 13 des Basisteils 12 verbindbar ist. Danach ist die Elektrode 11 einfach wieder aus der Steckaufnahme 13 des Basisteils 12 herausziehbar. Dabei sind das Basisteil 12 und die Elektrode 11 derart aufeinander abgestimmt, dass die Elektrode 11 mit einer Bewegung entlang ihrer Längsachse L vom Basisteil 12 trennbar ist.

Das Basisteil 12 weist weiterhin im Zentrum seiner Oberseite einen Gegenelektrodenkontakt 53 auf, der mit einer Hochspannung beaufschlagbar und mit einer Gegenelektrode 15 verbindbar ist. In einer Verbindungsposition, in welcher die Elektrode 11 und das Basisteil 12 des Abscheiders 10 miteinander verbunden sind, ist die Gegenelektrode 15 innerhalb der Elektrode 11 angeordnet.

Die Gegenelektrode 15 ist mittels eines Haltegriffs 47 mit dem Gegenelektrodenkontakt 53 verbindbar oder von ihr lösbar. Der Haltegriff 47 verfügt über einen Schnellverschluss 94, mittels dessen der Haltegriff 47 in einen lösbaren Formschluss mit der Gegenelektrode 15 bringbar ist und somit das Ergreifen der Gegenelektrode 15 erlaubt. Vor dem Einsetzen des Abscheiders 10 in den Sprühtrockner 8 wird der Haltegriff 47 von der Gegenelektrode 15 entfernt.

Überdies verfügt der Abscheider 10 über einen hülsenförmigen Abscheidermantel 46, welcher die Elektrode 11 seitlich umschliesst und für eine elektrische und thermische Isolierung sorgt. Der Abscheidermantel 46 besteht aus einem PUR-Schaumstoff und weist eine radiale Dicke von etwa 20 mm auf. Am Basisteil 12 ist weiterhin seitlich eine Kabelverschraubung 54 angeordnet, mittels deren die Federkontakte und der Gegenelektrodenkontakt 53 mit einer Hochspannung beaufschlagbar sind (vgl. Figuren 5a,b unten).

Der in der Figur 3 dargestellte Aufbau ermöglicht es, dass die Elektrode 11 vom Basisteil 12 des Abscheiders 10 trennbar ist, ohne dass die Gegenelektrode 15 vom Basisteil 12 zu trennen ist. Dies ermöglicht eine besonders einfache Entnahme der Elektrode 11.

In den Figuren 4a,b ist die im Abscheider 10 aus der Figur 3 enthaltende Gegenelektrode 15 dargestellt. Die Gegenelektrode 15 weist einen stabförmigen Mittelkontakt 51 auf, auf den abwechselnd sternförmige, metallische Scheiben 45 und Distanzringe 48 angeordnet sind. Die sternförmigen Scheiben 45 weisen aussenumfänglich eine Vielzahl von radial nach aussen gerichteten Spitzen 16 auf. In der Nähe des unteren Endes des Mittelkontakts 51 ist eine Stützscheibe 49 angeordnet, welche an ihrer Unterseite von einem Anschlagring 50 gehalten wird und die darüber angeordneten sternförmigen Scheiben 45 und Distanzringe 48 stützt. In der Nähe des oberen Endes des Mittelkontakts 51 werden die sternförmigen Scheiben 45 und die Distanzringe 48 von einer Mutter 52 gehalten.

Das aus Polypropylen bestehende Basisteil 12 des Abscheiders 10 ist in den Figuren 5a,b separat dargestellt. Die Steckaufnahme 13 ist innerhalb der Vielzahl von Federkontakten 14 angeordnet. Eine Austrittsöffnung 55 durchdringt das Basisteil 12 von seiner Oberseite zu einer Aussparung 56 an seiner Unterseite. Die Aussparung 56 mündet am Aussenumfang 75 des Basisteils 12. Bei der Verwendung des Abscheiders in einem Sprühtrockner dient diese Austrittsöffnung 55 zum Herausleiten des Trocknungsgases. Die Figur 5b zeigt die Unterseite des Basisteils 12 in einem noch unfertigen Zustand. Die Kabelverschraubung 54 ist mit einem Kabelkanal 59 verbunden, welcher in das Innere des Basisteils 12 hineingefräst wurde. Im Kabelkanal 59 befindet sich ein Kabel 58, dessen eine Litze 61 mit dem Gegenelektrodenkontakt verbunden ist und dessen andere Litze 62 an einem Kontaktpunkt 57 mit den Federkontakten 14 verbunden ist. Der Kabelkanal 59 wird nach Einlegen des Kabels 58 zur Fertigstellung des Basisteils 12 vergossen.

In der Figur 6 ist eine Betätigungsvorrichtung 17 in einem Sprühtrockner dargestellt, mittels welcher ein Abscheider in eine Betriebsposition oder in eine Entnahmeposition bringbar ist. Die Betätigungsvorrichtung 17 umfasst eine Grundplatte 63, einen Betätigungshebel 64, ein drehbares Teil 67, eine Zwischenplatte 72 sowie eine Stützplatte 74.

Mit dem drehbaren Teil 67 sind drei Hebel 70 mittels jeweils einer Verbindungslasche 68 drehbar verbunden. Die Verbindungslaschen 68 sind ihrerseits mit den Hebeln 70 über Gelenke 84 drehbar verbunden. Jeder der drei Hebel 70 weist jeweils einen nach oben und einen nach unten gerichteten Kniehebel 69 auf. Beide Kniehebel 69 sind um einen Stift 71 um eine in der Horizontalen liegende Achse drehbar. Der Betätigungshebel 64 ist mittels dreier Schrauben 81 am drehbaren Teil 67 befestigt. Am Ende des Betätigungshebels 64 ist ein Griff 65 angeordnet.

Oberhalb der Grundplatte 63 sind Dämpfer 66 angeordnet. Die jeweils unteren Kniehebel 69 weisen eine Bohrung 85 auf, mittels welcher sie an Stiften 86 an der Grundplatte 63 drehbar verbunden sind, deren Achsen in der Horizontalen liegen. Auf der Unterseite der Zwischenplatte 72 sind drei Stifte 73 angeordnet, deren Achsen ebenfalls in der Horizontalen liegen. Die jeweils oberen Kniehebel 69 weisen Bohrungen 83 auf, mittels welcher sie mit jeweils einem der Stifte 73 drehbar verbunden sind.

Die Stützplatte 74 weist einen hülsenförmigen Mantel 78 und eine kreisförmige Stützfläche 79 auf, von dessen Unterseite ein zentraler Stift 76 sowie sechs äussere Stifte 91 hervorragen. Die Zwischenplatte 72, das drehbare Teil 67, die drei Hebel 70 sowie die Dämpfer 66 dringen in den Innenraum der Stützplatte 74 ein und werden von deren Mantel 78 umschlossen. Die Zwischenplatte 72, das drehbare Teil 67, der Betätigungshebel 64 sowie die Grundplatte 63 weisen jeweils eine zentrale Öffnung 77, 67, 90 bzw. 82 auf, durch welche der Stift 76 eingesetzt ist. Diese Verbindung ermöglicht eine vertikalen Führung des drehbaren Teils 67, der Zwischenplatte 72 und der Stützplatte 74 relativ zur Grundplatte 63 sowie eine drehbare Lagerung des drehbaren Teils 67 um die vertikal ausgerichtete Achse des zentralen Stifts 76. Zudem weisen die Zwischenplatte 72 sowie die Grundplatte 63 jeweils sechs äussere Öffnungen 92 bzw. 93 auf, durch welche die äusseren Stifte 91 eingesetzt sind. Durch diese Verbindung wird ein Verdrehen der Zwischenplatte 72 und der Stützplatte 74 relativ zur Grundplatte 63 verhindert.

Zur einhändigen Betätigung der Betätigungsvorrichtung 17 wird der Betätigungshebel 64 am Griff 65 um den Stift 76 herumgedreht. Dies ruft auch eine Drehung des drehbaren Teils 67 um den Stift 76 hervor. Die Art der Verbindung der Kniehebel 69 mit der Grundplatte 63 sowie mit der Zwischenplatte 72 verhindert, dass die Hebel 70 um die durch den zentralen Stift 76 definierte Drehachse gedreht werden. Stattdessen werden die Gelenke 84 in radialer Richtung auf die Drehachse zu oder von dieser weg bewegt. Diese Bewegung wird durch die Drehbarkeit der Verbindungslaschen 68 relativ zum drehbaren Teil 67, die Drehbarkeit an den Gelenken 84, die Drehbarkeit der Kniehebel 69 relativ zu den Hebeln 70 und die Drehbarkeit der jeweils unteren Kniehebel 69 relativ zur Zwischenplatte 72 ermöglicht. Infolge dieser Bewegung werden die Kniehebel 69 relativ zu den Hebeln 70 gedreht, so dass die Grundplatte 63 relativ zur Stützplatte 74 in einer vertikalen Richtung bewegt wird. Die durch den zentralen Stift 76 und die äusseren Stifte 91 bewirkte Führung verhindert dabei ein Mitdrehen der Stützplatte 74 relativ zur Grundplatte 63. Die Dämpfer 66 bewirken die Abfederung dieser vertikalen Bewegung.

Die Dämpfer 66 bestehen aus Gummi oder Kunststoff. Die übrigen Einzelteile der Betätigungsvorrichtung 17 bestehen aus rostfreiem Edelstahl oder Aluminium.

Zur Verwendung in einem erfindungsgemässen Sprühtrockner 8 mit einem Abscheider 10 ist der Abscheider 10 auf der Oberseite der Stützplatte 74 aufgesetzt. Zum Entnehmen der Elektrode 11 aus dem Sprühtrockner 8 werden die folgenden Schritte ausgeführt:
a) Überführen des Abscheiders 10 relativ zum Sprühtrockner 8 in eine Entnahmeposition, insbesondere durch Absenken der Stützplatte 74, insbesondere durch Bedienung der Betätigungsvorrichtung 17;
b) seitliche Entnahme des Abscheiders 10 aus dem Sprühtrockner 8;
c) Entnahme der Elektrode 11 aus dem Abscheider 10.

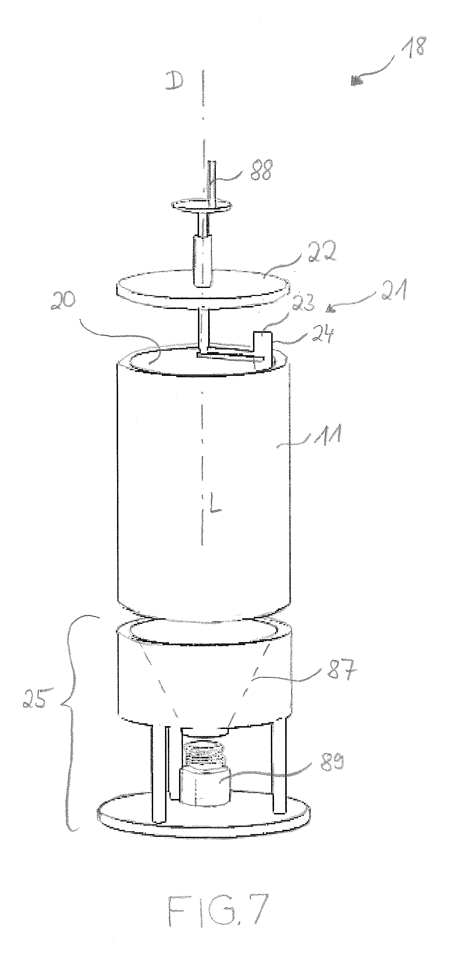

In der Figur 7 ist eine erfindungsgemässe Abtrennvorrichtung 18 zum Abtrennen von Partikeln von einer Innenoberfläche 20 einer hülsenförmigen Elektrode 11 dargestellt. Die Abtrennvorrichtung 18 enthält Abstreifmittel 21, die um eine Drehachse D drehbar angeordnet sind, welche parallel zu einer Längsachse L der Elektrode 11 ist. Die Abstreifmittel 21 weisen einen elastischen Streifen 23 mit einer Abstreifkante 24 auf. Diese Abstreifkante 24 ist im Wesentlichen parallel zu der Längsachse L der Elektrode 11 und mit der Innenoberfläche 20 der Elektrode 11 in Kontakt bringbar. Die Abstreifmittel 21 sind drehbar mit einem Deckel 22 verbunden, welcher formschlüssig auf die Elektrode 11 aufsetzbar ist.

Weiterhin weist die Abtrennvorrichtung 18 Auffangmittel 25 zum Auffangen der abgestreiften Partikel auf, welche einen Trichter 87 umfassen und formschlüssig mit der Elektrode 11 verbindbar sind.

Zum Abtrennen von Partikeln von der Innenoberfläche 20 der hülsenförmigen Elektrode 11 eines elektrostatischen Abscheiders wird zunächst die Elektrode 11 aus dem Abscheider entnommen. Anschliessend wird die Elektrode 11 auf die Auffangmittel 25 aufgesetzt. Anschliessend wird der Deckel 22 derart auf die Elektrode 11 aufgesetzt, dass die Streifen 23 in Kontakt mit der Innenoberfläche 20 der Elektrode 11 geraten. Zum Abtrennen der Partikel von der Innenoberfläche 20 wird der Streifen 23 mittels einer Kurbel 88 relativ zum Deckel 22 und damit auch relativ zur Elektrode 11 um die Drehachse D gedreht. Die hierdurch von der Innenoberfläche 20 abgestreiften Partikel fallen sodann in den Trichter 87 und von dort in einen darunter angeordneten Auffangbehälter 89.

## Patentansprüche

1. Heizung (1), insbesondere für einen Sprühtrockner (8), mit wenigstens einem Heizelement (2), wenigstens einem Heizkörper (3), der einen offenporigen Metallschaum (4) umfasst, sowie einem Fluideingang (5) und einem Fluidausgang (6),
**dadurch gekennzeichnet, dass**
der Metallschaum (4) derart zwischen dem Fluideingang (5) und dem Fluidausgang (6) angeordnet ist, dass ein durch den Fluideingang (5) einströmendes und durch den Fluidausgang (6) ausströmendes Fluid (F) mittels des Metallschaums (4) laminarisiert wird.

2. Heizung (1) gemäss Anspruch 1,
**dadurch gekennzeichnet, dass**
das Heizelement (2) als elektrisches Widerstandsheizelement ausgebildet ist, bevorzugt einen insbesondere gewundenen Heizdraht umfasst.

3. Heizung (1) gemäss einem der Ansprüche 1 und 2,
**dadurch gekennzeichnet, dass**
das Heizelement (2) mit dem Metallschaum (4) direkt verbunden ist, insbesondere in den Metallschaum (4) eingepresst ist.

4. Heizung (1) gemäss einem der Ansprüche 1 bis 3,
**dadurch gekennzeichnet, dass**
der Metallschaum (4) zwischen zwei von dem Fluid (F) durchströmbaren Halteelementen (7,7'), insbesondere zwei Gittern, angeordnet ist, insbesondere zwischen den Halteelementen (7,7') gehalten wird.

5. Sprühtrockner (8) mit einer Heizung (1), welche einen Heizkörper (3) enthält, der einen offenporigen Metallschaum (4) umfasst, insbesondere Sprühtrockner (8) mit einer Heizung (1) gemäss einem der Ansprüche 1 bis 4.

6. Verfahren zum gleichzeitigen Heizen und Laminarisieren eines Fluids (F), insbesondere eines Gases, insbesondere eines Trocknungsgases in einem Sprühtrockner (8), wobei das Fluid (F) durch einen offenporigen Metallschaum (4) strömt.
